# EUROPÄISCHE PATENTSCHRIFT

(11) **EP 2 483 344 B1**
(45) Veröffentlichungstag und Bekanntmachung des Hinweises auf die Patenterteilung: **29.10.2014**
(21) Anmeldenummer: 10762866.1
(22) Anmeldetag: 17.09.2010
(51) Int. Cl.: C08K 5/521, C08K 5/00

(54) **POLYCARBONATZUSAMMENSETZUNGEN MIT VERBESSERTER SCHMELZESTABILITÄT**
POLYCARBONATE COMPOSITIONS WITH AN IMPROVED MELT STABILITY
COMPOSITIONS DE POLYCARBONATE À STABILITÉ AMÉLIORÉE À L'ÉTAT FONDU

(30) Priorität: 30.09.2009 DE 102009043510
(43) Veröffentlichungstag der Anmeldung: 08.08.2012
(73) Patentinhaber: Bayer Intellectual Property GmbH, 40789 Monheim (DE)
(72) Erfinder: WEHRMANN, Rolf, 47800 Krefeld (DE); HEUER, Helmut-Werner, 51371 Leverkusen (DE)
(74) Vertreter: BIP Patents
(86) Internationale Anmeldenummer: PCT/EP2010/005725
(87) Internationale Veröffentlichungsnummer: WO 2011/038842

(56) Entgegenhaltungen:
- WO-A1-00/18844
- DE-A1- 19 721 628
- DE-B- 1 194 142
- US-A- 4 762 873

## Beschreibung

Die Erfindung betrifft Polycarbonatzusammensetzungen und Copolycarbonatzusammensetzungen mit verbesserter Schmelzestabilität, deren Herstellung sowie deren Verwendung zur Herstellung von Zusammensetzungen, z. B. Blends und daraus erhältliche Formteile. Insbesondere Zusammensetzungen, welche phenolgruppenhaltige Substanzen wie Additive, Verunreinigungen oder Oligomere und Restmonomere enthalten, sowie phenolgruppenhaltige Polycarbonate sind hierbei von besonderem Interesse.

Polycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere mechanische Eigenschaften gefordert sind. Ein weiteres großes Einsatzgebiet sind optische Datenspeicher wie die verschiedenen CD- und DVD-Formate sowie Blu-ray Disc und HD-DVD, sowie Extrusionsanwendungen wie Polycarbonatplatten, Diffuser-Sheets für Hintergrundbeleuchtung, LED-Anwendungen und andere Displayanwendungen oder Wasserflaschen, aber auch optische Anwendungen im Automobilbereich, wie Verscheibungen, Kunststoffabdeckungen, Streuscheiben oder Lichtleiterlemente, Kollimatoren, Linsen, polymere Lichtwellenleiter, sowie Lampenabdeckungen für Langfeldleuchten.

Bei allen diesen Anwendungen werden immer mechanischen Eigenschaften und rheologische Eigenschaften, z.B. guter Fließfähigkeit, bei gleichzeitig hoher thermischer Belastbarkeit, insbesondere bei der Verarbeitung, gefordert.
Dies ist besonders bei längeren Cycluszeiten sowie unerwarteten Produktionsstörungen mit erzwungener höherer thermischer Belastung im Werkzeug von großer Bedeutung. Gute thermische Eigenschaften, erfordern eine hohe Schmelzestabilität bei Temperaturen über 300 °C, die u.a. durch die Minimierung von Folgereaktionen in der Schmelze erhalten wird.
Insbesondere kann die Stabilität der Schmelze durch zugesetzte Additive oder inhärent vorhandenen Nebenprodukte, wie z. B. Phenolgruppen enthaltende Oligomere, Phenolendgruppen des Polymer Backbones oder auch Phenol selbst, herabgesetzt werden, die zu einem unerwünschten Abbau des Polycarbonates führen. Dieser Abbau äußert sich dann in einer Verringerung der Schmelzviskosität.
Damit einhergehend ist immer eine Verschlechterung der thermischen und mechanischen Eigenschaften festzustellen. Eine Reaktion von zugesetzten Additiven wie z. B. Farbmittel oder UV-Absorber oder inhärent vorhandene oligomere Bestandteile, Restmonomere bzw. Polycarbonat mit phenolischen OH-Endgruppen über deren phenolische OH-Gruppe, wirkt sich demnach negativ auf die Schmelzestabilität aus.

Bei kontinuierlichen Herstellverfahren von Polycarbonaten wie z. B. nach dem Phasengrenzflächen- oder dem Schmelzepolykondensationsverfahren, und/oder nachgelagerte Verarbeitungsschritte wie z. B. Compoundierung, Spritzguss oder Extrusion, werden die Polycarbonatschmelzen starkem thermischem Stress und hoher Scherenergie in den Aufarbeitungsaggregaten ausgesetzt. Dadurch können Schädigungen im Polymer, wie oben dargelegt u.a. durch Folgereaktionen auftreten, die sich in verminderter thermischer Stabilität, Polymerabbau sowie einem erhöhten Yellowness Index bei thermischer Langzeitanwendung äußern.

Es bestand daher die Aufgabe, aromatische Polycarbonatzusammensetzungen und Copolycarbonatzusammensetzungen mit verbesserter Schmelzestabilität und reduziertem Folgereaktionspotential unter Erhalt sonstigen Kerneigenschaften zu entwickeln.

Die Aufgabe der Erfindung war die Entwicklung einer Polycarbonatzusammensetzung, die auch bei höherer thermischer Belastung - z. B. Produktionsstörungen (lange Verweilzeiten des Materials im heißen Werkzeug) oder höherem thermischem Stress bei Durchsatzerhöhung zur Steigerung der Maschinenauslastung - über eine gute Schmelzestabilität verfügt.

Somit sollten für anspruchsvolle Spritzgussverfahren wie z. B. 2-Komponentenspritzguss oder Spritzprägeverfahren beispielsweise zum Herstellen großer Formteile wie Automobilverscheibungen oder -sonnendächer bzw. Abdeckscheiben für Frontbeleuchtungen Polycarbonatzusammensetzungen mit verbesserter Schmelzestabilität bereitgestellt werden.
Die EP 0023291 beschreibt stabilisierte thermoplastische Formmassen auf Basis von Polycarbonaten, ABS-Polymeren und überbrückten Phosphorigsäureestern.

Phosphite der Oxidationsstufe +3 haben den Nachteil, daß sie das Hydrolyseverhalten der entsprechend additivierten Polycarbonate bzw. Polycarbonatblends stark negativ beeinflussen.

Diese Substanzen haben in Polycarbonatzusammensetzungen jedoch keine stabilisierende Wirkung auf die Schmelzekonstanz und verhindern nicht unerwünschte Folgereaktionen, welche sich in einer Veränderung, insbesondere einer Erniedrigung, der Viskosität während des Verarbeitungsprozess äußern und damit letztendlich zu einem instabilen, schwankenden Verarbeitungsprozess führen. Es wird lediglich der Schutz gegenüber rein thermischem Abbau beschrieben, der sich in einer Vergilbung bei der Langzeitlagerung äußert (klassische Thermoalterung).

Der Stand der Technik gibt jedoch keinerlei Hinweise auf den Einfluss von Phosphaten, Diphosphaten oder Mischungen von Phosphaten mit anderen Thermostabilisatoren wie z. B. Phosphiten, Phosphinen oder Phosphoniten in Polycarbonaten und deren Compounds und deren Einfluss auf die Schmelzestabilität.

DE 11 94 142 B beschreibt lediglich die Verwendung von Säuren und in der Hitze sauer wirkender Ester zur sauren Einstellung von Polycarbonaten mit verbesserter Schlag- und Kerbschlagzähigkeit und Spannungsrisskorrosion.

WO 2000/18844 A1 beschreibt flammgeschützte, schlagzähmodifizierte Polycarbonatzusammensetzungen mit verbesserter Bruchfestigkeit, bei denen der Anteil der Phosphate als Verunreinigung im Flammschutzmittel vorliegt.

DE 197 21 628 A1 beschreibt flammgeschützte, schlagzähmodifizierte Polycarbonatzusammensetzungen mit verbesserter Fließnahtfestigkeit und Wärmeformbeständigkeit, bei denen als Flammschutzmittel ein Gemisch aus oligomeren Phosphaten und Monophosphaten vorliegt.

US 4,762,873 beschreibt Polycarbonatzusammensetzungen mit einer Additivzusammensetzung von Teilestern einbasiger Fettsäuren mit Polyolen, Trimethylphosphaten und Phosphitestern.

Überraschenderweise wurde gefunden, dass zugesetzte Phosphate der Formeln (1) und (2) zu einer verbesserten Schmelzestabilität führen.

Gegenstand der vorliegenden Erfindung sind daher Polycarbonatzusammensetzungen enthaltend mindestens ein Phosphat der Formel (1) 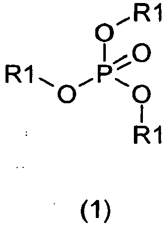 wobei R1 ausgewählt ist aus der Gruppe, die verzweigte Alkylreste, Arylreste und substituierte Arylreste umfasst, und wobei als Phosphat mindestens Triisooctylphosphat enthalten ist und optional weitere Phosphorverbindungen der Formel (1) oder Phosphorverbindungen der Formel (2) 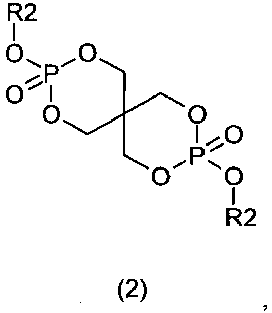 wobei R2 ausgewählt ist aus der Gruppe, die verzweigte Alkylreste, Arylreste und substituierte Arylreste umfasst,
und mindestens einen Thermostabilisator, ausgewählt aus der Gruppe, die die sekundären Antioxidantien der Formeln (5) bis (8) umfasst 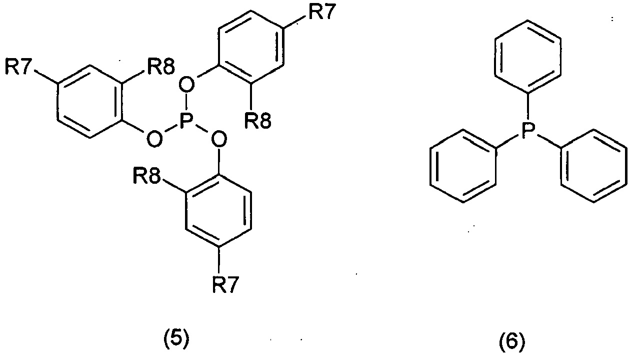 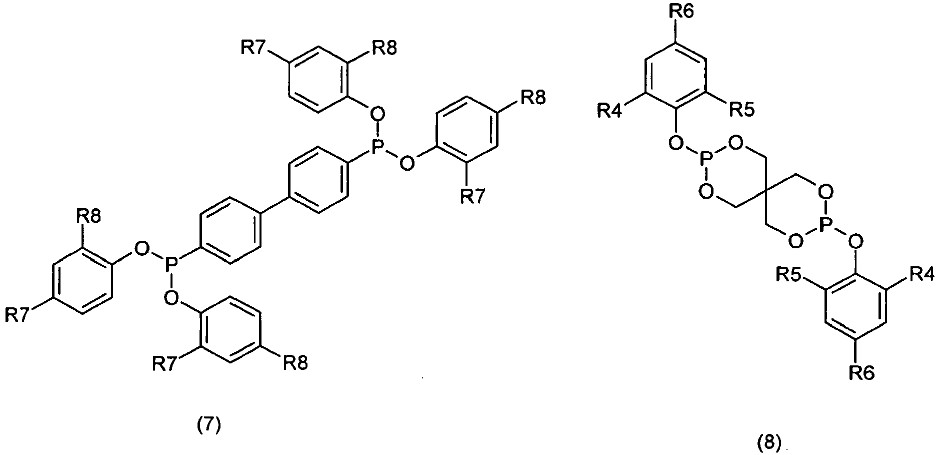 wobei R4, R5, R6, R7 und R8 jeweils unabhängig voneinander und untereinander für H, einen C₁ - C₈-Alkylrest, Phenylrest oder einen substituierten Phenylrest steht,
wobei das Verhältnis von sekundären Antioxidantien (Thermostabilisatoren) zu den Phosphaten der Formeln (1) und (2) zwischen 4:1 bis 1:4 beträgt.

Der Arylrest ist vorzugsweise mit C₁ - C₈-Alkyl, verzweigtem C₁ - C₈-Alkyl, oder Cumyl substituiert, wobei die Substituenten gleich oder verschieden sein können, gleiche Substituenten jedoch bevorzugt sind.
Bevorzugt sind die Arylreste in den Positionen 2 und 4 oder 2, 4 und 6 substituiert.
Ganz besonders bevorzugt sind tert-Butylsubstituenten in diesen Positionen.

Der Phenylrest bei den Verbindungen der Formeln (5) bis (8) ist vorzugsweise mit C₁ - C₈-Alkyl, verzweigtem C₁ - C₈-Alkyl, oder Cumyl substituiert, wobei die Substituenten gleich oder verschieden sein können, gleiche Substituenten jedoch bevorzugt sind.

Vorzugsweise stehen R4, R5, R6, R7 und R8 für verzweigtes C₁ - C₈- Alkyl oder Cumyl, besonders bevorzugt für tert-Butyl oder Cumyl.

Die Verbindungen (1) bzw. (2) werden vorzugsweise in situ in einem kontinuierlichen Polycarbonatherstellprozess oder einem Compoundierprozess direkt oder in Form eines Masterbatches über ein Seitenaggregat, vorzugsweise unter Luftausschluss, einer Polycarbonatschmelze zugeführt.

Die Verbindungen der Formeln (1) und (2) werden in Mengen von 5 bis 1500 ppm, bevorzugt 10 bis 1200 ppm, weiter bevorzugt 20 bis 1000 ppm und besonders bevorzugt 25 bis 800 ppm, und ganz besonders bevorzugt von 30 bis 300 ppm, eingesetzt.

Erfindungsgemäße Polycarbonatzusammensetzungen enthalten Verbindungen der Formel (4) (Triisooctylphosphat, TOF):

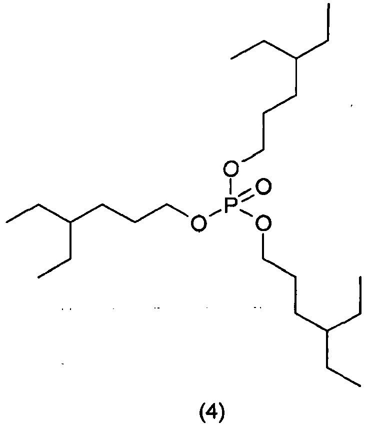

Die Verbindungen mit Strukturelementen der Formeln (5) bis (8) werden als sekundäre Antioxidantien bezeichnet (Hydroperoxid-Zersetzer; Plastics Additives Handbook, 5th Edition, Hanser Verlag München, 2001). Optional können auch noch primäre Antioxidantien (Radikalfänger), z. B. sterisch gehinderte Phenole oder HALS-Stabilisatoren zugesetzt werden (Plastics Additives Handbook, 5th Edition, Hanser Verlag München, 2001).

Der Gehalt dieser Thermostabilisatoren bezogen auf die Gesamtmasse der Zusammensetzung beträgt vorzugsweise 30 bis 600 ppm, weiter bevorzugt 50 bis 500 ppm, und besonders bevorzugt 500 ppm.

Das Verhältnis von sekundären Antioxidantien zu den erfindungsgemäßen Phosphaten beträgt zwischen 4:1 bis 1:4, .

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die thermoplastischen Polycarbonate, Copolycarbonate einschließlich der thermoplastischen, aromatischen Polyestercarbonate, beide unter dem Begriff Polycarbonat zusammengefasst, haben Molekulargewichte M_{w} (Gewichtsmittel Mw, ermittelt durch Gelpermeationschromatographie (GPC) Messung, Polycarbonateichung) von 10.000 bis 200.000, vorzugsweise von 15.000 bis 100.000 und besonders bevorzugt von 17.000 - 70.000 g/mol.

Gegenstand der vorliegenden Erfindung sind weiterhin Zusammensetzungen enthaltend oben genannte Polycarbonatzusammensetzungen mit Phosphorverbindungen der Formeln (1) und (2) und mindestens ein Additiv ausgewählt aus der Gruppe bestehend aus UV-Stabilisator und Entformungsmittel sowie gegebenenfalls Farbmittel.

Die Zusammensetzung enthält im Allgemeinen 0,01 bis 3,000 bevorzugt 0,02 bis 1,50 weiter bevorzugt von 0,03 bis 1,00, und besonders bevorzugt 0,04 bis 0,80 Gew.-% (bezogen auf die Gesamtzusammensetzung), Additive.

Als UV-Stabilisatoren sind organische UV-Stabilisatoren geeignet. Die UV-Stabilisatoren sind bevorzugt ausgewählt aus der Gruppe, die Benzotriazole (z. B. Tinuvine der Fa. Ciba), Triazine CGX-06 der Fa. Ciba), Benzophenone (Uvinule der Fa. BASF), Cyanacrylate (Uvinule der Fa. BASF), Zimtsäureester und Oxalanilide sowie Mischungen dieser UV-Stabilisatoren umfaßt.

Beispiele für geeignete UV-Absorber sind:

### a) Malonester der Formel (I):

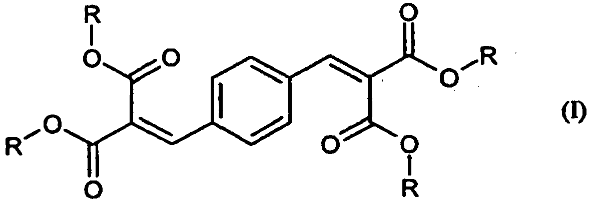

Worin R Alkyl bedeutet. Bevorzugt steht R für C1-C6-Alkyl, insbesondere für C1-C4-Alkyl und besonders bevorzugt für Ethyl.

### b) Benzotriazol-Derivate nach Formel (II):

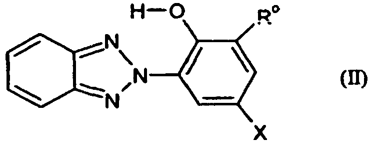

In Formel (II) sind R° enthaltend und X gleich oder verschieden und bedeuten H oder Alkyl oder Alkylaryl.

Bevorzugt sind dabei Tinuvin® 329 mit X = 1,1,3,3-Tetramethylbutyl und R° = H, Tinuvin® 350 mit X = tert-Butyl und R0 = 2-Butyl und Tinuvin® 234 mit X und R° = 1,1-Dimethyl-1-phenyl

### c) Dimere Benzotriazol-Derivate nach Formel (III):

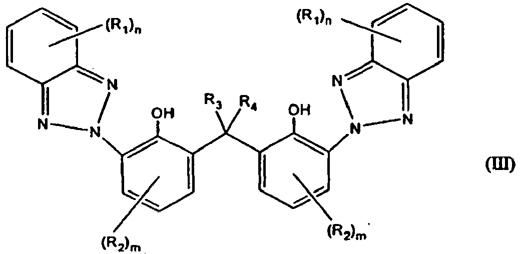

In Formel (III) sind R1 und R2 gleich oder verschieden und bedeuten H, Halogen, C1- C10-Alkyl, C5- C10-Cycloalkyl, C7-C 13 -Aralkyl, C6-C 14 -Aryl, -OR5 oder -(CO)-O-R 5 mit R5 = H oder C1-C4-Alkyl.

In Formel (III) sind R3 und R4 ebenfalls gleich oder verschieden und bedeuten H, C1-C4-Alkyl, C5- C6 -Cycloalkyl, Benzyl oder C6-C14-Aryl.

In Formel (III) bedeuten m 1,2 oder 3 und n 1,2,3 oder 4.

Bevorzugt ist dabei Tinuvin® 360 mit R1 = R3 = R4 = H; n = 4; R2 = 1,1,3,3-Tetramethylbutyl; m = 1

### d) Dimere Benzotriazol-Derivate nach Formel (IV):

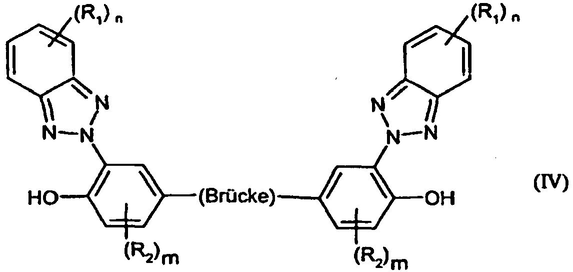

worin die Brücke 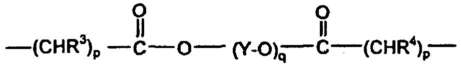 bedeutet, R1 , R2 , m und n die für Formel (III) genannte Bedeutung haben, und worin p eine ganze Zahl von O bis 3 ist, q eine ganze Zahl von 1 bis 10 ist, Y gleich -CH2-CH2-, -(CH2)3-, -(CH2)4-, -(CH2)5-, -(CH2)6-, oder CH(CH3)-CH2-ist und R3 und R4 die für Formel (III) genannte Bedeutung haben.

Bevorzugt ist dabei Tinuvin® 840 mit R1 = H; n = 4; R2 = tert-Butyl; m = 1; R2 ist in ortho-Stellung zur OH-Gruppe angebracht; R3 = R4 = H; p = 2; Y = -(CH2)5-; q = 1

### e) Triazin-Derivate nach Formel (V):

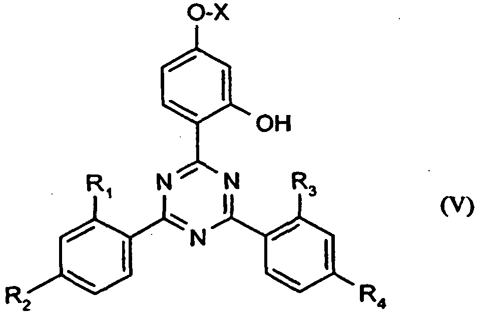

worin R1, R2, R3, R4 gleich oder verschieden sind und H, Alkyl, Aryl, CN oder Halogen sind und X gleich Alkyl, vorzugsweise iso-Octyl, ist.

Bevorzugt ist dabei Tinuvin® 1577 mit R1 = R2 = R3 = R4 = H; X = Hexyl sowie Cyasorb® UV-1 164 mit R1 = R2 = R3 = R4 = Methyl; X Octyl

### f) Triazin-Derivate der folgenden Formel (Va):

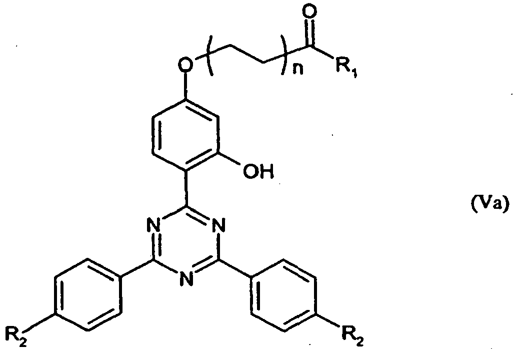

worin R1 gleich C1 Alkyl bis C17-Alkyl bedeutet, R2 gleich H oder C1-Alkyl bis C4-Alkyl bedeutet und n gleich 0 bis 20 ist.

### g) Dimere Triazin-Derivate der Formel (VI):

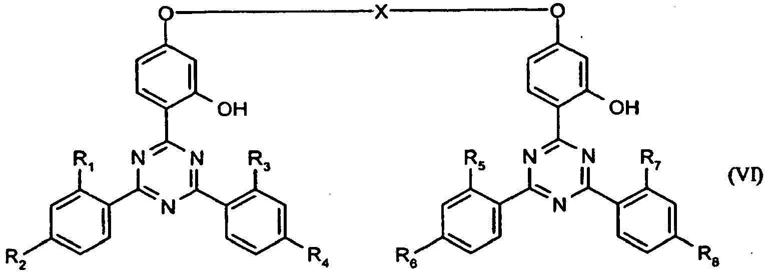

worin R1, R2, R3, R4, R5, R6, R7, R8 gleich oder verschieden sein können und H, Alkyl, CN oder Halogen bedeuten und X gleich Alkyliden, vorzugsweise Methyliden oder -(CH2 CH2-O-)n-C(=O)- ist und n für 1 bis 10, vorzugsweise 1 bis 5, insbesondere 1 bis 3.

### h) Diarylcyanoacrylate der Formel (VII):

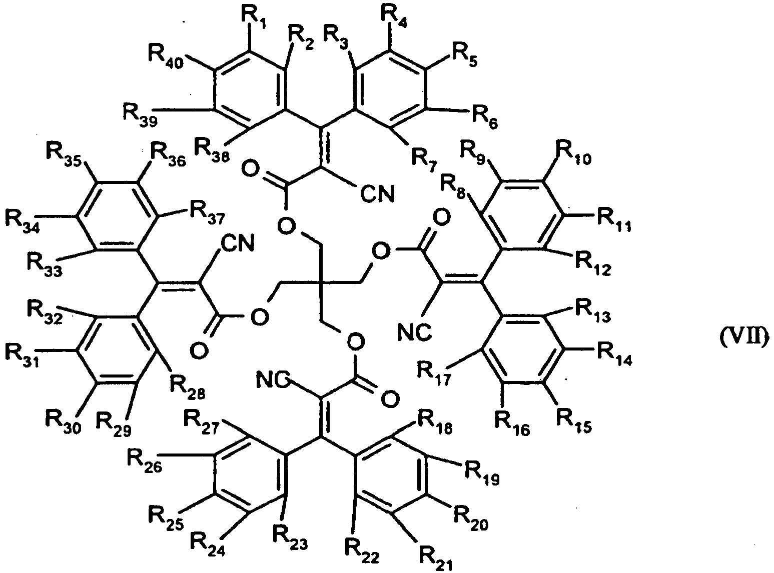

worin R1 bis R40 gleich oder verschieden sein können und H, Alkyl, CN oder Halogen bedeuten.

Bevorzugt ist dabei Uvinul® 3030 mit R1 bis R40 = H.

Besonders bevorzugte UV-Stabilisatoren für die erfindungsgemäßen Formmassen sind Verbindungen aus der Gruppe, die aus den Benzotriazolen (b) und dimeren Benzotriazolen (c und d), den Malonestern (a) und den Cyanacrylate (h) sowie Mischungen dieser Verbindungen besteht.

Die UV-Stabilisatoren werden eingesetzt in Mengen von 0,01 Gew.-% bis 1,00 Gew.-%, bevorzugt in Mengen von 0,05 Gew.-% bis 0,80 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Sofern die Zusammensetzung als Masterbatch für UV-Absorber oder als Coextrusionsschicht verwendet wird, kann der Gehalt an UV-Absorber 3 - 20 Gew.-%, vorzugsweise 5 - 8 Gew.%, bezogen auf die Gesamtzusammensetzung betragen.

Die den erfindungsgemäßen Zusammensetzungen gegebenenfalls zugesetzten Entformungsmitttel sind bevorzugt ausgewählt aus der Gruppe, die Pentaerythrittetrastearat, Glycerinmonostearat, Stearylstearat und Propoandiolstearat sowie deren Mischungen umfaßt. Die Entformungsmittel werden eingesetzt in Mengen von 0,05 Gew.-% bis 2,00 Gew.-% bezogen auf die Formmasse, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Formmasse.

Als primäre Antioxidantien kommen bevorzugt sterisch gehinderte Phenole (z. B. Irganox-Typen der Fa. Ciba, beispielsweise Irganox 1076 (Octadecyl-3-(3,5-di-tert.butyl-4-hydroxyphenyl)-propionat), Irganox 1010 (Pentaerythritol tetrakis(3-(3,5-di-tert.butyl-4-hydroxyphenyl)-propionat) oder Irganox 1035 (Thiodiethylen bis (3-(3,5-di-tert.butyl-4-hydroxyphenyl)-propionat) zum Einsatz.
Ferner können die erfindungsgemäßen Zusammensetzungen übliche Additive wie andere Thermostabilisatoren, Antistatika, Farbmittel, Fließhilfsmittel und Flammschutzmittel enthalten.

Die Herstellung der erfindungsgemäß zu verwendenden Polycarbonate erfolgt prinzipiell in bekannter Weise aus Diphenolen, Kohlensäurederivaten und gegebenenfalls Verzweigern.

Allgemein ist das Verfahren zur Polycarbonatsynthese bekannt und in zahlreichen Publikationen beschrieben. EP-A 0 517 044, WO 2006/072344, EP-A 1 609 818, WO 2006/072344 und EP-A 1 609 818 und dort zitierte Dokumente beschreiben beispielsweise das Phasengrenzflächen und das Schmelzeverfahren zur Herstellung von Polycarbonat.

Für die Herstellung von Polycarbonaten geeignete Dihydroxyarylverbindungen sind solche der Formel (9)

HO-Z-OH (9)

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (9) für einen Rest der Formel (10) 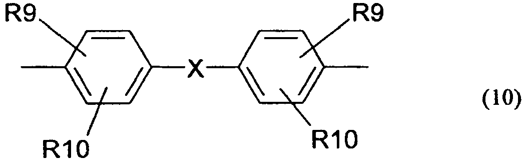 in der
R⁹ und R¹⁰ unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C5 bis C12-Cycloalkyliden, -O-, -SO-, -CO-, -S-, -SO₂-, besonders bevorzugt steht X für eine Einfachbindung, Isopropyliden, C5 bis C12 Cycloalkyliden oder Sauerstoff.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-3,3,5-trimetylcyclohexan.

Besonders bevorzugte Diphenole sind 2,2-Bis-(4-hydroxyphenyl)-propan (BPA), 4,4'-Dihydroxydiphenyl (DOD) und 2,2-Bis-(3-methyl-4-hydroxyphenyl)-propan, 1,1-Bis-(4-hydroxyphenyl)-3,3,5-trimetylcyclohexan (TMC).

Diese und weitere geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzoesischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die Durchführung der Polycarbonatsynthese erfolgt kontinuierlich. Die Reaktion in der Phasengrenzfläche (LPC-Verfahren) kann in Umpumpreaktoren, Rohrreaktoren, oder Rührkesselkaskaden oder deren Kombinationen erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Die Menge an einzusetzenden Kettenabrecher in Form von Monophenolen wie Phenol, tert.-Butylphenol oder Cumylphenol beträgt 0,5 Mol-% bis 10,0 Mol-%, bevorzugt 1,0 Mol-% bis 8,0 Mol-%, besonders bevorzugt 2.0 Mol-% bis 6.0 Mol-% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew%-ig).

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin, besonders bevorzugt Triethylamin und N-Ethylpiperidin. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10,000 Mol % bezogen auf Mole eingesetzte Bisphenole, bevorzugt 0,01 bis 8,00 Mol %, besonders bevorzugt 0,05 bis 5,00 Mol %.

Die organische Phase wird mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann.

Die Isolierung des Polymers aus der Lösung kann durch Verdampfen des Lösungsmittels mittels Temperatur, Vakuum oder eines erhitzten Schleppgases erfolgen.

Aus den so erhaltenen hochkonzentrierten Polymerschmelzen können die Reste des Lösungsmittels entweder direkt aus der Schmelze mit Ausdampfextrudern, Dünnschichtverdampfern, Fallfilmverdampfern, Strangverdampfern oder durch Friktionskompaktierung, gegebenenfalls auch unter Zusatz eines Schleppmittels, wie Stickstoff oder Kohlendioxid oder unter Verwendung von Vakuum, entfernt werden, alternativ auch durch anschließende Kristallisation und Ausheizen der Reste des Lösungsmittels in der festen Phase.

Die Reaktion in der Schmelze (Schmelzepolykondensationsverfahren, SPC-Verfahren) kann nach dem Umesterungsverfahren diskontinuierlich oder auch kontinuierlich gestaltet werden. Nachdem die Dihydroxyarylverbindungen und Diarylcarbonate, ggf. mit weiteren Verbindungen, als Schmelze vorliegen, wird in Gegenwart eines geeigneten Katalysators die Umsetzung gestartet werden. Der Umsatz bzw. das Molekulargewicht wird bei steigenden Temperaturen und fallenden Drücken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und ggf. zugesetzter Verbindungen, wie beispielsweise einer höhersiedenden Monohydroxyarylverbindung, werden die Endgruppen in Art und Konzentration geprägt.

Vorzugsweise ist das kontinuierliche Verfahren zur Herstellung von Polycarbonaten dadurch gekennzeichnet, dass eine oder mehrere Dihydroxyarylverbindungen mit dem Diarylcarbonat, ggf. auch anderer zugesetzter Reaktanten unter Verwendung der Katalysatoren aufgeschmolzen werden und nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventile miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten.

Die in diesen Stufen erreichte relative Viskosität des Vorkondensats des oligomeren Carbonats liegt zwischen 1,04 und 1,20, bevorzugt zwischen 1,05 und 1,15, besonders bevorzugt zwischen 1,06 bis 1,10.

In einer bevorzugten Ausführungsform wird das so erzeugte Oligocarbonat nach einer Verweilzeit von 5 bis 20 min in einer Sumpfvorlage gegebenenfalls mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine relative Viskosität von 1,12 bis 1,28, bevorzugt 1,13 bis 1,26, besonders bevorzugt 1,13 bis 1,24. Die diesen Reaktor (Mittelviskos-Reaktor) verlassende Schmelze wird in einem weiteren Scheiben-oder Korbreaktor (Hochviskos-Reaktor) auf die gewünschte Endviskosität bzw. das Endmolekulargewicht durch Abtrennen des Kondensationsproduktes Phenol gebracht. Dabei betragen die Temperaturen 270 bis 330°C, bevorzugt 280 bis 320°C, besonders bevorzugt 280 bis 310°C, der Druck 0,01 bis 3,00 mbar, vorzugsweise 0,2 bis 2,0 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann auch in einem Korbreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der der Produkte zu erzielen.

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Vor dem Abspinnen (Granulierung) werden in die Schmelze über ein Seitenaggregat (Seitenextruder) die Verbindungen der Formeln (1)und /oder (2) als reine Substanz oder als Masterbatch in Polycarbonat (max. 10 Gew.-%) zugeführt. Dieser Masterbatch kann ggf. weitere Additive wie Licht-Stabilisatoren, Entformungsmittel, Thermostabilisatore oder Farbadditive enthalten.

Der Zusatz von Additiven dient der Verlängerung der Nutzungsdauer durch Stabilisatoren, die einen Abbau der Zusammensetzungsbestandteile verhindern, der Farbgebung des Endprodukts , der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete übliche Additive für Polycarbonatzusammensetzungen sind beispielsweise beschrieben in "Additives for Plastics Handbook, John Murphy, Elsevier, Oxford 1999", im "Plastics Additives Handbook, Hans Zweifel, Hanser, München 2001" oder in WO 99/55772, S. 15-25.

Desweiteren können Farbmittel, wie organische Farbstoffe oder Pigmente oder anorganische Pigmente, IR-Absorber, einzeln, im Gemisch oder auch in Kombination mit Stabilisatoren, Glas(hohl)kugeln, anorganischen Füllstoffen oder organische oder anorganische Streupigmente zugesetzt werden.

Die erfindungsgemäßen Polycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die so erhältlichen Polycarbonatzusammensetzungen mit verbesserten Schmelzeeigenschaften gemäß vorliegender Erfindung, können zur Herstellung von Extrudaten (Platten, Folien und deren Laminate; z. B. für Kartenanwendungen und Rohre) und Formkörpern (Flaschen), insbesondere solchen zur Verwendung im transparenten Bereich, besonders im Bereich optischer Anwendungen wie z.B. Platten, Stegplatten, Verglasungen, Streu- oder Abdeckscheiben, Lampenabdeckungen, Kunststoffabdeckscheiben, Lichtleitelemente oder optischer Datenspeicher, wie Audio-CD, CD-R(W), DVD, DVD-R(W), Minidises in ihren verschiedenen nur lesbaren oder aber einmalbeschreibbaren gegebenenfalls auch wiederholt beschreibbaren Ausführungsformen sowie Datenträger für near-field-Optiken. Weiterhin zur Herstellung von Gegenständen für den Elektro/Elektronik und IT-Bereich.

Ein weiteres großes Einsatzgebiet der erfindungsgemäßen Polycarbonatzusammensetzungen sind Diffuser Sheets für Hintergrundbeleuchtungen, Streuscheiben und andere Displayanwendungen, aber auch optische Anwendungen im Automobilbereich, wie Verscheibungen, Kunststoffabdeckungen, Sonnendächer, UV-geschützte Streu- und Abdeckscheiben, Lichtleiterlemente, Kollimatoren, Linsen, LED Anwendungen, Polymerlichtleiterelemente, sowie Lampenabdeckungen für Langfeldleuchten.

Die Polycarbonat-Zusammensetzungen der vorliegenden Erfindung werden insbesondere zur Herstellung von Compounds, Blends wie z. B. PC/ABS, PC/ASA, PC/SAN, PC/PBT, PC/PET oder PC/PETG und Bauteilen verwendet werden, die besondere Anforderungen an optische und mechanische Eigenschaften stellen" wie beispielsweise Gehäuse, Gegenstände im E/E-Bereich, wie Stecker, Schalter, Platten, Lampenhalterungen, -abdeckungen im Automobilbereich, Lampenfassungen und -abdeckungen, und Verscheibungen, Medizinbereich wie Dialysatoren, Konnektoren, Hähne, Verpackung wie Flaschen, Behälter.

Die Extrudate und Formkörper bzw. Formteile aus den erfindungsgemäßen Polymeren sind ebenfalls Gegenstand der vorliegenden Anmeldung.

### Beispiele

Zu Tabelle 1:
Polycarbonatzusammensetzungen auf Basis von Makrolon 2808 (BPA-Polycarbonat mit einem MVR von 10 cm³/10min bei 300°C/1,2 kg, Bayer MaterialScience) werden auf einem Zweiwellenextruder bei 280 °C mit den in Tabelle 1 aufgeführten Additiven versehen
Bei den erfindungsgemäßen Polycarbonatzusammensetzungen werden zusätzlich 0,01 Gew.-% Tri-isoctylphosphat (TOF, Lanxess) zugegeben.
PETS: Pentaerithrittetrastearat; Loxiol VPG 861 der Fa. Cognis
Tin 329: Tinuvin 329;Hydroxybenzotriazol UV Absorber der Fa. BASF/Ciba
TPP: Triphenylphosphin der Fa. BASF
PEPQ: Irgafos P PEPQ; dimeres Phosphonit der Fa. BASF/Ciba (Formel 7 mit R7 und R8 = tert.-butyl).
Irgafos 168: Phosphit der Fa. BASF/Ciba (Formel 5 mit R7 und R8 = tert.Butyl)
Irganox B900: Gemisch aus Irgafos 168 und Irganox 1076 (sterisch gehindertes Phenol) im Verhältnis 4:1 der Fa. BASF/Ciba
Doverphos S 9228-PC: Dimeres Phosphit der Fa. Dover, USA (Formel 8 mit R4 = H und R5, R6 = Cumyl)

**Tabelle 1**

| **Polycarbonatzusammensetzung** | | **1 *** | **2** | **3 *** | **4** | **5 *** | **6** | **7 *** | **8** | **9 *** | **10** |
|---|---|---|---|---|---|---|---|---|---|---|---|
| Makrolon 2808 | % | 99,455 | 99,445 | 99,455 | 99,445 | 99,455 | 99,445 | 99,455 | 99,445 | 99,455 | 99,445 |
| PETS | % | 0,27 | 0,27 | 0,27 | 0,27 | 0,27 | 0,27 | 0,27 | 0,27 | 0,27 | 0,27 |
| TIN 329 | % | 0,25 | 0,25 | 0,25 | 0,25 | 0,25 | 0,25 | 0,25 | 0,25 | 0,25 | 0,25 |
| TPP | % | 0,025 | 0,025 | - | - | - | - | - | - | - | - |
| PEPQ | % | - | - | 0,025 | 0,025 | - | - | - | - | - | - |
| Irgafos 168 | % | - | - | - | - | 0,025 | 0,025 | - | - | - | - |
| Irganox B900 | % | - | - | - | - | - | - | 0,025 | 0,025 | - | - |
| Doverphos S-9228 | % | - | - | - | - | - | - | - | - | 0,025 | 0,025 |
| TOF | % | - | 0,01 | - | 0,01 | - | 0,01 | - | 0,01 | - | 0,01 |

| | | | | | | | | | | | |
|---|---|---|---|---|---|---|---|---|---|---|---|
| * Vergleichsbeispiel | | | | | | | | | | | |

Die so erhaltenen Polycarbonatzusammensetzungen werden anschließend nach Trocknung bei 120 °C über Nacht unterschiedlich lang (20 und 30 Minuten) bei einer Temperatur von 320 C belastet. Nach Ablauf der jeweiligen Belastungszeit wird der MVR bei jeweils 1,2 kg gemessen. Die so erhaltenen MVR-Werte sind in der Tabelle 2 eingetragen.

**Tabelle 2**

| **Ergebnisse** | **1** | **2** | **3** | **4** | **5** | **6** | **7** | **8** | **9** | **10** |
|---|---|---|---|---|---|---|---|---|---|---|
| | **TPP** | **TPP+TOF** | **PEPQ** | **PEPQ+TOF** | **1168** | **I168+TOF** | **B900** | **B900+TOF** | **S9228** | **S9228+TOF** |
| TOF-Gehalt mg/kg | - | 71 | - | 71 | - | 69 | - | 74 | - | 72 |
| MVR 300°C ml/10 min | 20,0 | 18,9 | 19,2 | 18,9 | 19,1 | 18,5 | 19,1 | 21,8 | 21,6 | 21,3 |
| IMVR 320°C 20' ml/10 min | 23,2 | 20,2 | 20,4 | 19,7 | 21,1 | 18,8 | 20,0 | 22,2 | 22,8 | 21,9 |
| IMVR 320°C 30' ml/10 min | 26,7 | 21,2 | 21,6 | 19,8 | 20,7 | 19,4 | 21,1 | 22,4 | 23,4 | 22,2 |
| **Delta MVR / IMVR20' 320°C** | **3,2** | **1,3** | **1,2** | **0,8** | **2,0** | **0,3** | **0,9** | **0,4** | **1,2** | **0,6** |
| **Delta MVR / IMVR30' 320°C** | **6,7** | **2,3** | **2,4** | **0,9** | **1,6** | **0,9** | **2,0** | **0,6** | **1,8** | **0,9** |

Man erkennt, dass jede Polycarbonatzusammensetzung, die zusätzlich ein Phosphat der Formel (1) oder (2) (hier TOF) enthält, über eine deutlich höhere Schmelzestabilität verfügt. Die lässt sich am Maß delta MVR ablesen: Delta MVR ist für jedes Phosphat-haltige erfindungsgemäße Beispiel kleiner als der dazugehörige Wert des dazugehörige Wert des Vergleichsbeispiels. Dies gilt sowohl für die Klasse der Phosphite und Phosphonite als auch für Mischungen von Phosphiten mit sterisch gehinderten Phenolen (synergistische Mischungen).

Weitere Beispiele mit UV-geschützten und Phenol additivierten Zusammensetzungen:

Für die Beispiele 11 (vergleich) und 12 wurde ebenfalls Makrolon 2808 (BPA-Polycarbonat mit einem MVR von 10 cm³/10min bei 300°C/1,2 kg, Bayer MaterialScience), dem verschiedene UV-Absorber und auch Phenol zugesetzt werden. Es ist bekannt, daß diese Verbindungen mit freier Hydroxy-Funktion zu einem starken Abbau von Polycarbonaten bei der Lagerung, insbesondere in Verbindung mit thermischen Stress, führen.

**Tabelle 3**

| | **MVR @ 320°C** | | **MVR @ 340°C** | | | | |
|---|---|---|---|---|---|---|---|
| Beispiel 11 | **20 min** | **30 min** | **delta MVR** | **20 min** | **30 min** | **delta MVR** | Eincompoundiertes Additiv (0,2 %) |
| a | 19,8 | 20,0 | 0,2 | 32,5 | 33,0 | 0,5 | Blindprobe |
| b | 20,8 | 21,8 | 1,0 | 34,9 | 37,0 | 2,1 | Tinuvin 329 |
| c | 20,9 | 21,1 | 0,2 | 35,2 | 38,1 | 2,9 | Tinuvin 360 |
| d | 24,5 | 26,2 | 1,7 | 44,3 | 57,4 | 13,1 | Phenol |
| | | | | | | | |
| | | | | | | | |

| Beispiel 12 | **20 min** | **30 min** | **delta MVR** | **20 min** | **30 min** | **delta MVR** | Eincompoundiertes Additiv (0,2 %) + TOF (100 ppm) |
|---|---|---|---|---|---|---|---|
| a | 20,2 | 20,4 | 0,2 | 33,2 | 33,1 | -0,1 | Blindprobe + TOF |
| b | 20,8 | 21,1 | 0,3 | 34,4 | 35,4 | 1,0 | Tinuvin 329 + TOF |
| c | 20,3 | 20,6 | 0,3 | 34,2 | 34,6 | 0,4 | Tinuvin 360 + TOF |
| d | 21,0 | 21,1 | 0,1 | 34,1 | 34,9 | 0,8 | Phenol + TOF |

Der Vergleich der erfindungsgemäßen Zusammensetzungen in Tabelle 3, die die erfindungsgemäßen Phosphate enthalten, mit den entsprechenden Vergleichsbeispielen zeigt eine deutlich höhere Schmelzestabilität, d. h. eine geringere Veränderung des MVR als bei den Vergleichsproben ohne das Phosphat. Dies belegt die Schmelze-stabilisierende Wirkung der Phosphate in den erfindungsgemäßen Polycarbonatzusammensetzungen.

## Patentansprüche

1. Zusammensetzung, enthaltend ein Bisphenol-A haltiges Polycarbonat oder Copolycarbonat und mindestens eine Phosphorverbindung der Formeln (1) 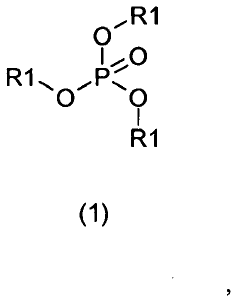 wobei R1 ausgewählt ist aus der Gruppe, die verzweigte Alkylreste, Arylreste und substituierte Arylreste umfasst, und wobei als Phosphat mindestens Triisooctylphosphat enthalten ist und optional weitere Phosphorverbindungen der Formel (1) oder Phosphorverbindungen der Formel (2) 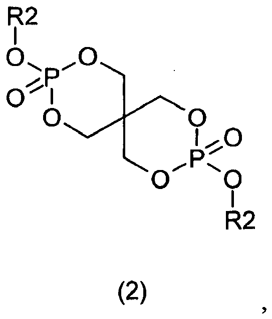 wobei R2 ausgewählt ist aus der Gruppe, die verzweigte Alkylreste, Arylreste und substituierte Arylreste umfasst,
und mindestens einen Thermostabilisator, ausgewählt aus der Gruppe, die die sekundären Antioxidantien der Formeln (5) bis (8) umfasst 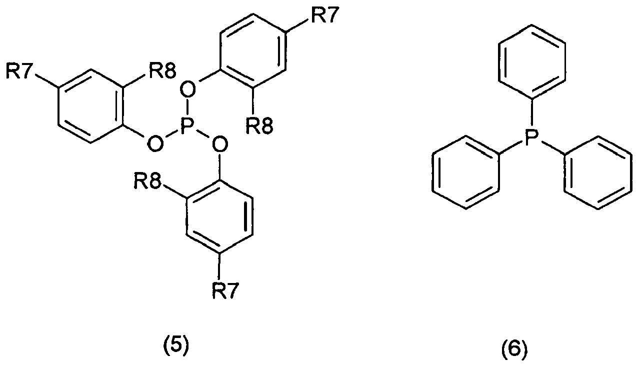 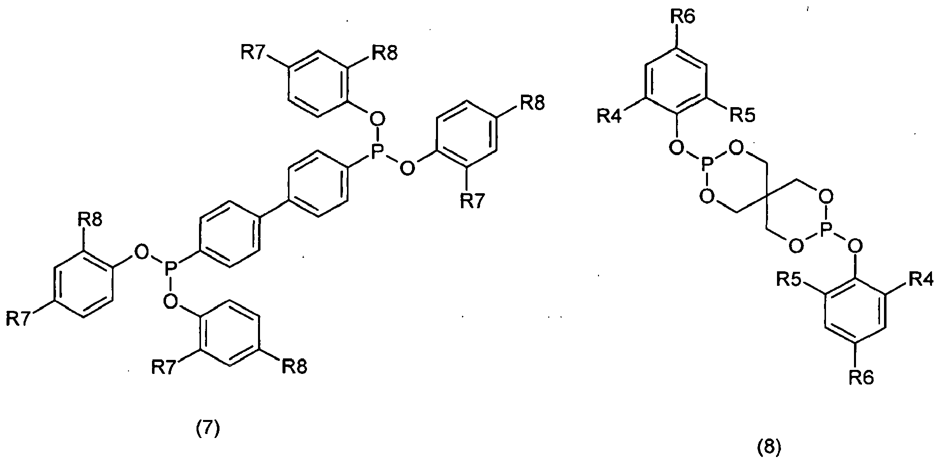 wobei R4, R5, R6, R7 und R8 jeweils unabhängig voneinander und untereinander für H, einen C₁ - C₈-Alkylrest, Phenylrest oder einen substituierten Phenylrest steht,
wobei das Verhältnis von sekundären Antioxidantien (Thermostabilisatoren) zu den Phosphaten der Formeln (1) und (2) zwischen 4:1 bis 1:4 beträgt.

2. Zusammensetzung nach Anspruch 1, **dadurch gekennzeichnet, dass** der Gehalt an Phosphorverbindungen der Formeln (1) und (2), bezogen auf die Gesamtmasse der Zusammensetzung, 5 bis 1500 ppm beträgt.

3. Zusammensetzung nach Anspruch 1, **dadurch gekennzeichnet, dass** der Gehalt an Phosphorverbindungen der Formeln (1) und (2), bezogen auf die Gesamtmasse der Zusammensetzung, 30 bis 300 ppm beträgt.

4. Zusammensetzung nach Anspruch 1, **dadurch gekennzeichnet, dass** sie mindestens ein Additiv enthalten, ausgewählt aus der Gruppe, bestehend aus UV-Stabilisatoren, weitere Thermostabilisatoren, Entformungsmitteln und Farbmitteln.

5. Zusammensetzung nach Anspruch 4, **dadurch gekennzeichnet, dass** der UV-Absorber aus der Gruppe der Benzotriazole, der Triazine, der Cyanacrylate oder der Malonester ausgewählt ist.

6. Zusammensetzung nach Anspruch 4 oder 5, **dadurch gekennzeichnet, dass** der Gehalt an UV-Stabilisator von 0,1 Gew.-% bis 0,4 Gew.-%, bezogen auf die Gesamtzusammensetzung, beträgt.

7. Zusammensetzung nach Anspruch 4, **dadurch gekennzeichnet, dass** als ein weiteres Additiv ein Thermostabilisator ausgewählt ist aus der Gruppe, die sterisch gehinderte Phenole (primäre Antioxidantien) umfasst.

8. Zusammensetzung nach Anspruch 4 oder 7, **dadurch gekennzeichnet, dass** der Gehalt an Thermostabilisator, bezogen auf die Gesamtmasse der Zusammensetzung, 30 bis 600 ppm beträgt.

9. Zusammensetzung nach Anspruch 1, **dadurch gekennzeichnet, dass** das Polycarbonat ein Molekulargewicht M_{w} von 10.000 bis 200.000, vorzugsweise von 15.000 bis 100.000 und besonders bevorzugt von 17.000 - 70.000 g/mol aufweist.

10. Verfahren zur Herstellung einer Zusammensetzung nach Anspruch 1, umfassend die Schritte:
a) Herstellung einer Polycarbonatzusammensetzung aus einem in einem kontinuierlichen Verfahren nach dem Phasengrenzflächenverfahren oder Schmelzeverfahren gewonnenen Basisharz, **dadurch gekennzeichnet, dass** mindestens ein Phosphat der Formel (1) mit R1 ausgewählt aus der Gruppe, die verzweigte Alkylreste, Arylreste und substituierte Arylreste umfasst, und wobei als Phosphat mindestens Triisooctylphosphat enthalten ist und optional weitere Phosphorverbindungen der Formel (1) und/oder Phosphorverbindungen der Formel (2) direkt oder in Form eines Masterbatches über ein Seitenaggregat der Polycarbonatschmelze zugeführt werden, gegebenenfalls unter Luftausschluss.

11. Verwendung der Zusammensetzung nach Anspruch 1 zur Herstellung von Blends und Compounds.

12. Extrudate und Formkörper, enthaltend Zusammensetzungen nach Anspruch 1.

## Claims

1. Composition containing a polycarbonate or copolycarbonate containing bisphenol A, and at least one phosphorus compound of the formula (1) 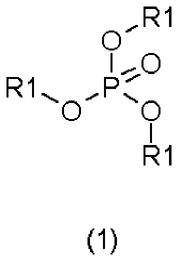 wherein R1 is chosen from the group which includes branched alkyl radicals, aryl radicals and substituted aryl radicals, and wherein, as phosphate, at least triisooctyl phosphate is present and optionally other phosphorus compounds of the formula (1) or phosphorus compounds of the formula (2) 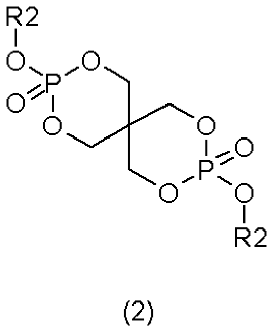 wherein R2 is chosen from the group which includes branched alkyl radicals, aryl radicals and substituted aryl radicals,
and at least one heat stabilizer chosen from the group which includes the secondary antioxidants of the formulae (5) to (8) 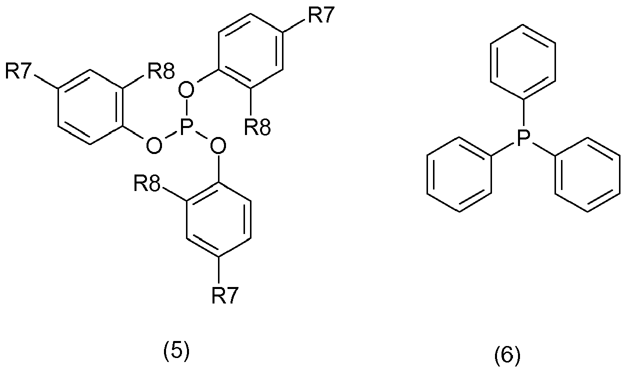 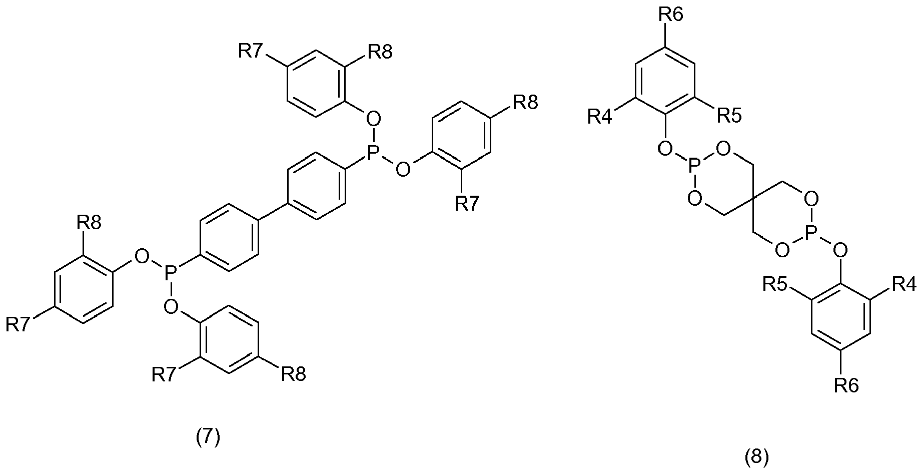 wherein R4, R5, R6, R7 and R8 in each case independently of each other and among one another represent H, a C₁ - C₈-alkyl radical, a phenyl radical or a substituted phenyl radical,
wherein the ratio of secondary antioxidants (heat stabilizers) to the phosphates of the formulae (1) and (2) is from 4:1 to 1:4.

2. Composition according to Claim 1, **characterized in that** the content of phosphorus compounds of the formulae (1) and (2), based on the total mass of the composition, is 5 to 1,500 ppm.

3. Composition according to Claim 1, **characterized in that** the content of phosphorus compounds of the formulae (1) and (2), based on the total mass of the composition, is 30 to 300 ppm.

4. Composition according to Claim 1, **characterized in that** it contains at least one additive chosen from the group consisting of UV stabilizers, further heat stabilizers, mould release agents and colouring agents.

5. Composition according to Claim 4, **characterized in that** the UV absorber is chosen from the group of benzotriazoles, triazines, cyanoacrylates or malonates.

6. Composition according to Claim 4 or 5, **characterized in that** the content of UV stabilizer is from 0.1 wt.% to 0.4 wt.%, based on the total composition.

7. Composition according to Claim 4, **characterized in that** as a further additive a heat stabilizer is chosen from the group which includes sterically hindered phenols (primary antioxidants).

8. Composition according to Claim 4 or 7, **characterized in that** the content of heat stabilizer, based on the total weight of the composition, is 30 to 600 ppm.

9. Composition according to Claim 1, **characterized in that** the polycarbonate has a molecular weight M_{w} of from 10,000 to 200,000, preferably from 15,000 to 100,000 and particularly preferably from 17,000 - 70,000 g/mol.

10. Process for the preparation of a composition according to Claim 1, comprising the steps:
a) preparation of a polycarbonate composition from a base resin obtained in a continuous process by the interfacial process or melt process, **characterized in that** at least one phosphate of the formula (1), where R1 is chosen from the group which includes branched alkyl radicals, aryl radicals and substituted aryl radicals, and wherein, as phosphate, at least triisooctyl phosphate is present and optionally other phosphorous compounds of the formula (1) and/or phosphorus compounds of the formula (2), are fed to the polycarbonate melt directly or in the form of a masterbatch via a side unit, optionally with exclusion of air.

11. Use of the composition according to Claim 1 for the preparation of blends and compounds.

12. Extrudates and shaped articles containing compositions according to claim 1.

## Revendications

1. Composition, contenant un polycarbonate ou un copolycarbonate contenant du bisphénol A et au moins un composé phosphoré de formule (1) 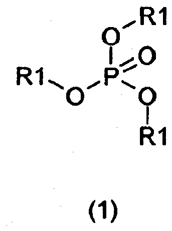 dans laquelle R1 est choisi dans le groupe comprenant des radicaux alkyle ramifiés, des radicaux aryle et des radicaux aryle substitués, et du triisooctylphosphate étant au moins contenu comme phosphate, et comprenant éventuellement d'autres composés phosphorés de formule
(1) ou des composés phosphorés de formule (2) 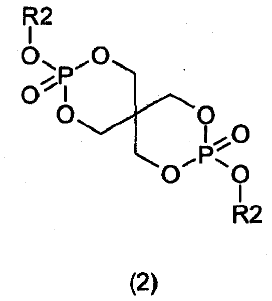
dans laquelle R2 est choisi dans le groupe comprenant des radicaux alkyle ramifiés, des radicaux aryle et des radicaux aryle substitués,
et au moins un stabilisant thermique choisi dans le groupe qui comprend les antioxydants secondaires des formules (5) à (8) 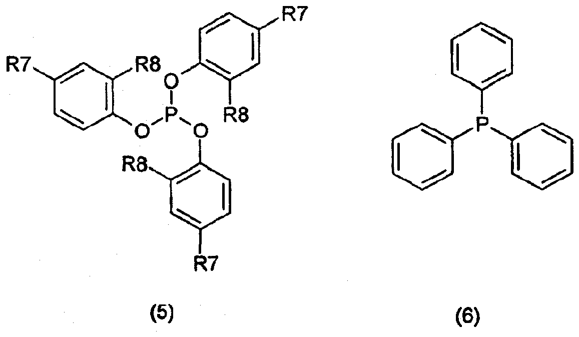 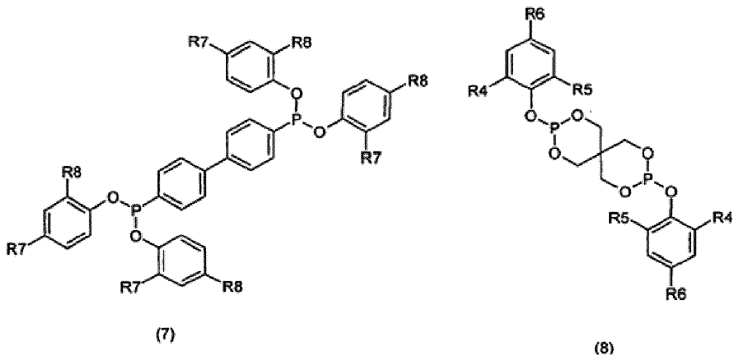 dans lesquelles R4, R5, R6, R7 et R8 représentent à chaque fois, indépendamment les uns des autres, H, un radical C₁-C₈-alkyle, un radical phényle ou un radical phényle substitué,
le rapport des antioxydants secondaires (stabilisants thermiques) aux phosphates des formules (1) et (2) étant situé entre 4:1 à 1:4.

2. Composition selon la revendication 1, **caractérisée en ce que** la teneur en composés phosphorés des formules (1) et (2), par rapport à la masse totale de la composition, vaut 5 à 1500 ppm.

3. Composition selon la revendication 1, **caractérisée en ce que** la teneur en composés phosphorés des formules (1) et (2), par rapport à la masse totale de la composition, vaut 30 à 300 ppm.

4. Composition selon la revendication 1, **caractérisée en ce qu'**elle contient au moins un additif choisi dans le groupe constitué par les stabilisants UV, d'autres stabilisants thermiques, les agents de démoulage et les colorants.

5. Composition selon la revendication 4, **caractérisée en ce que** l'absorbant des UV est choisi dans le groupe formé par les benzotriazoles, les triazines, les cyanoacrylates ou les esters maloniques.

6. Composition selon la revendication 4 ou 5, **caractérisée en ce que** la teneur en stabilisant UV est de 0,1 à 0,4% en poids, par rapport à la composition totale.

7. Composition selon la revendication 4, **caractérisée en ce qu'**on choisit comme autre additif un stabilisant thermique dans le groupe qui comprend les phénols stériquement encombrés (antioxydants primaires).

8. Composition selon la revendication 4 ou 7, **caractérisée en ce que** la teneur en stabilisant thermique, par rapport à la masse totale de la composition, vaut 30 à 600 ppm.

9. Composition selon la revendication 1, **caractérisée en ce que** le polycarbonate présente un poids moléculaire M_{w} de 10 000 à 200 000, de préférence de 15 000 à 100 000 et de manière particulièrement préférée de 17 000-70 000 g/mole.

10. Procédé pour la préparation d'une composition selon la revendication 1, comprenant les étapes de procédé :
a) préparation d'une composition de polycarbonate à partir d'une résine de base obtenue dans un procédé continu selon le procédé à interface ou le procédé en masse fondue, **caractérisé en ce qu'**au moins un phosphate de formule (1) dans laquelle R1 est choisi dans le groupe comprenant des radicaux alkyle ramifiés, des radicaux aryle et des radicaux aryle substitués, et du triisooctylphosphate étant au moins contenu comme phosphate, et éventuellement d'autres composés phosphorés de formule (1) et/ou des composés phosphorés de formule (2) sont alimentés directement sous forme d'un lot maître via un appareil latéral dans la masse fondue de polycarbonate, le cas échéant à l'abri de l'air.

11. Utilisation de la composition selon la revendication 1 pour la préparation de mélanges et de compounds.

12. Produits extrudés et corps façonnés contenant les compositions selon la revendication 1.
